(19) Europäisches Patentamt
European Patent Office
Office européen des brevets

(11) Veröffentlichungsnummer: **0 477 830 A1**

(12) # EUROPÄISCHE PATENTANMELDUNG

(21) Anmeldenummer: **91116167.7**

(51) Int. Cl.[5]: **C01B 21/068**, C04B 35/58

(22) Anmeldetag: **23.09.91**

(30) Priorität: **26.09.90 CH 3097/90**

(43) Veröffentlichungstag der Anmeldung: **01.04.92 Patentblatt 92/14**

(84) Benannte Vertragsstaaten: **AT BE CH DE ES FR GB IT LI NL SE**

(71) Anmelder: **LONZA AG**
**Gampel/Wallis Geschäftsleitung Basel**
**CH-4002 Basel(CH)**

(72) Erfinder: **van Dijen, Franciscus, Dr.**
**Jestetter Strasse 5A**
**W-7891 Baltersweil(DE)**
Erfinder: **Vogt, Ulrich, Dipl.-Min.**
**Tannenstrasse 3**
**Schaffhausen(CH)**

(74) Vertreter: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8**
**W-8000 München 40(DE)**

(54) **Verfahren zur Herstellung von alpha-Siliciumnitridpulver.**

(57) α-Siliciumnitridpulver wird durch reduktive Nitridierung von Siliciumdioxid hergestellt. Als Siliciumdioxid wird das bei der Aluminiumfluoridherstellung aus Hexafluorkieselsäure und Aluminiumhydroxid entstehende amorphe Siliciumdioxid verwendet. Das α-Siliciumnitridpulver enthält weniger als 5% β-Modifikation und weist sehr niedrige Sauerstoff-, Kohlenstoff- und Metallgehalte auf.
Je nach Reaktionsbedingungen werden Primärteilchengrössen unterhalb 1 µm oder gröbere Teilchen bis 50 µm erhalten.

EP 0 477 830 A1

Die vorliegende Erfindung betrifft ein Verfahren zur Herstellung von α-Siliciumnitridpulver aus Siliciumdioxid.

Siliciumnitrid ($Si_3N_4$) gewinnt als Ausgangsmaterial für hochtemperaturfeste Keramik, beispielsweise für Turbinenschaufeln, immer mehr an Bedeutung. Für diese Verwendung ist es wesentlich, dass das Siliciumnitrid keine unerwünschten Verunreinigungen enthält und in Form feiner aber gleichzeitig kompakter Teilchen vorliegt, damit eine hohe Gründichte und somit ein porenfreies Sintern ohne übermässiges Schwinden erreicht werden kann.

Die wünschenswerten Eigenschaften eines Siliciumnitridpulvers für keramische Zwecke lassen sich folgendermassen zusammenfassen:

- mittlere Teilchengrösse zwischen 0,1 und 1 µm
- enge Teilchengrössenverteilung (aber keine gleich grossen Teilchen)
- "gleichachsige", d.h. annähernd würfel- oder kugelförmige Teilchen
- Anteil der α-Modifikation >95%
- Sauerstoffgehalt <1,5 Gew.%
- Kohlenstoffgehalt <0,2 Gew.%
- metallische Verunreinigungen <0,1 Gew.% (C.Boberski et al., Angew.Chem.Adv.Mater. 101, 1592, (1989)).

Es sind zahlreiche Verfahren zur Herstellung von Siliciumnitrid bekannt, die jedoch teils Produkte mit unbefriedigenden Eigenschaften liefern, teils mit so hohen Kosten verbunden sind, dass die Produkte aus Preisgründen für viele Anwendungen nicht in Frage kommen (D.L.Segal, Br.Ceram.Trans.J. 85, 184, (1986)).

Für eine kostengünstige Produktion von Siliciumnitrid kommt als Ausgangsmaterial praktisch nur Siliciumdioxid in Betracht. Es ist bekannt, dass Siliciumdioxid mit Kohlenstoff und Stickstoff nach der Bruttogleichung

$$3\ SiO_2 + 6\ C + 2\ N_2 \rightarrow Si_3N_4 + 6\ CO$$

zu Siliciumnitrid und Kohlenmonoxid umgesetzt werden kann. Nachteile dieses Verfahrens sind z.B. die Bildung von Siliciumcarbid als Nebenreaktion bei Abweichung von den optimalen Reaktionsbedingungen und der erforderliche Kohlenstoffüberschuss, der nach der Nitridbildung entfernt werden muss, beispielsweise durch Oxidation.

Es ist deshalb schwierig, ein Produkt zu erhalten, das gleichzeitig geringen Sauerstoffgehalt und geringen Kohlenstoffgehalt aufweist. Ausserdem ist die Durchmischung der Reaktionspartner (2 Feststoffe, 1 Gas) kritisch und beeinflusst die Reaktionsgeschwindigkeit stark.

Es ist weiterhin bekannt, anstelle von Kohlenstoff kohlenstoffhaltige Verbindungen, beispielsweise Kohlenwasserstoff, oder anstelle von Stickstoff Ammoniak oder ammoniakhaltige Gasgemische zu verwenden (B.G.Durham et al., Adv.Ceram.Mater. 3, 45, (1988)), wobei als Siliciumdioxid hochdisperses pyrogenes Siliciumdioxid eingesetzt wurde. Auch mit diesem hochreaktiven, aber relativ teuren und wegen seiner geringen Schüttdichte schlecht handhabbaren Ausgangsmaterial wurden nicht alle oben aufgeführten Produkteigenschaften erreicht.

Schliesslich ist ebenfalls bekannt, dass amorphes Siliciumdioxid mit Ammoniak in Gegenwart von Kohlenmonoxid zu Siliciumnitrid umgesetzt werden kann (P.Petrovski et al., Mater. Sci.Eng. A, 109, 265, (1989)), während ohne CO-Zusatz nur Siliciumoxynitrid erhalten wurde.

Hierbei spielt wahrscheinlich die Bildung von HCN eine wichtige Rolle (F.K. van Dijen, J.Pluijmakers, J.Eur.Ceram.Soc. 5, 385 (1989)).

Bei 1350 °C wurde aus einem amorphen Siliciumdioxid (Kieselgel) mit Ammoniak in 24 Stunden ebenfalls α-Siliciumnitrid erhalten (M.Hoch und K.M.Nair, Ceram.Bull. 58, 187 (1979)), welches jedoch nicht näher charakterisiert wurde.

Aufgabe der vorliegenden Erfindung war es, ein Verfahren zur Herstellung von α-Siliciumnitridpulver bereitzustellen, das ein Produkt mit den eingangs aufgezählten Eigenschaften liefert, ohne auf teure oder schwer zugängliche Ausgangsmaterialien angewiesen zu sein.

Erfindungsgemäss wird die Aufgabe durch das Verfahren gemäss Patentanspruch 1 gelöst.

Es wurde gefunden, dass das bei der Herstellung von Aluminiumfluorid aus Hexafluorkieselsäure und Aluminiumhydroxid nach der Reaktionsgleichung

$$H_2SiF_6 + 2\ Al(OH)_3 \rightarrow 2\ AlF_3 + SiO_2 + 4\ H_2O$$

entstehende amorphe Siliciumdioxid gegebenenfalls nach entsprechender Vorbehandlung und bei Einhaltung der geeigneten Reaktionsbedingungen zu einem α-Siliciumnitridpulver umgesetzt werden kann, das alle eingangs aufgezählten Eigenschaften aufweist.

Das Siliciumdioxid stellt bei der industriellen Aluminiumfluoridproduktion ein Abfallprodukt dar und ist deshalb sehr preisgünstig und in grossen Mengen verfügbar. Die Gewinnung im Labormassstab ist beispielsweise in der US-PS 4 693 878 (Example 1) beschrieben.

Für die Herstellung von α-Siliciumnitrid wird das Siliciumdioxid zweckmässig mit Säure gewaschen, um den Aluminiumgehalt auf unschädliche Werte zu verringern. Als Waschflüssigkeit kann die in der Aluminiumfluoridherstellung ohnehin benötigte Hexafluorkieselsäure dienen, es sind aber auch andere Säuren, wie beispielsweise Salzsäure, verwendbar. Besondere Massnahmen zur weiteren Reduktion des Fluorgehalts sind nicht unbedingt

erforderlich, da das Fluor bei den zur Siliciumnitridherstellung nötigen Temperaturen entweicht, es kann jedoch vorteilhaft sein, auf die in der US-PS 4 693 878 beschriebene Weise das Fluor bereits vor der weiteren Umsetzung zu entfernen.

In einer bevorzugten Ausführungsform des erfindungsgemässen Verfahrens wird das gewaschene Siliciumdioxid zunächst in einer Rührwerkskugelmühle oder einem Attritor gemahlen bzw. desagglomeriert. Als Mahlflüssigkeit wird vorzugsweise Wasser verwendet und als Mahlkörper vorzugsweise solche aus Siliciumdioxid, beispielsweise Kugeln aus Quarzglas oder abgerundeter Quarzsand. Als besonders vorteilhaft hat sich ein unter dem Namen "Ottawasand" bekannter Quarzsand mit einer Korngrösse von ca. 1 mm erwiesen.

Zur Vermeidung von Verunreinigungen durch Metallabrieb wird vorzugsweise eine Rührwerkskugelmühle bzw. ein Attritor mit Elastomerauskleidung, beispielsweise aus Polyurethan, verwendet. Bei diesem Mahl- bzw. Desagglomeriervorgang wird vorteilhaft bereits das zur Keimbildung dienende $\alpha$-Siliciumnitridpulver zugesetzt. Es ist auch möglich, an dieser Stelle Zusätze wie beispielsweise Sinterhilfsmittel für die spätere Verwendung des erfindungsgemäss hergestellten Siliciumnitrids einzubringen.

Weiterhin können zur Erleichterung des Mahlbzw. Desagglomeriervorgangs übliche Hilfsstoffe, insbesondere Verflüssiger und Entschäumer, zugesetzt werden.

Anschliessend wird die Suspension nach einer der bekannten Methoden entwässert und in eine für die Umsetzung zu Siliciumnitrid geeignete Form gebracht.

Vorzugsweise wird die Entwässerung durch Sprühtrocknung durchgeführt, an die gegebenenfalls noch eine Granulation angeschlossen werden kann, falls noch gröbere Partikel gewünscht werden.

Die Reaktion mit Ammoniak kann grundsätzlich in jedem Reaktor durchgeführt werden, der die erforderlichen Temperaturen und Verweilzeiten erlaubt und einen ausreichenden Kontakt der Reaktanden gewährleistet. Im Labormassstab kann dies ein Rohrofen sein, im industriellen Massstab sind beispielsweise Festbettreaktoren, Reaktoren mit bewegtem Bett, Fliessbettreaktoren, Regenreaktoren, Transportreaktoren, Drehrohröfen oder Wirbelschichtreaktoren geeignet.

Besonders vorteilhaft sind Wirbelschichtreaktoren, weil in dieser Art Reaktor eine optimale Wechselwirkung zwischen gasförmigen und festen Reaktanden und ein guter Wärmeübergang gewährleistet ist.

Je nach verwendetem Reaktortyp wird das Siliciumdioxid zweckmässig in unterschiedlichen Granulatkörnungen eingesetzt. Für eine Wirbelschicht sind Korngrössen von 50 bis 700 $\mu$m vorteilhaft, für Festbett- oder Fliessbettreaktoren solche von 1 bis 10 mm. Für Transport- oder Regenreaktoren oder die Reaktion in einer dünnen Schicht wird vorteilhaft ein feines Granulat mit einer Korngrösse von 10 bis 200 $\mu$m verwendet.

Die Reaktion zwischen Siliciumdioxid und Ammoniak ohne Zusatz von Kohlenstoff oder kohlenstoffhaltigen Verbindungen folgt der Bruttogleichung

$$3\ SiO_2 + 4\ NH_3 \rightarrow Si_3N_4 + 6\ H_2O.$$

Die Aussage "ohne Zusatz von Kohlenstoff oder kohlenstoffhaltigen Verbindungen" bedeutet nicht, dass das Reaktionsgemisch absolut frei von Kohlenstoff sein muss, vielmehr können geringe Mengen von Kohlenstoffverbindungen, z.B. als Bindemittel, vorhanden sein.

Um eine Rückreaktion des Siliciumnitrids mit dem entstehenden Wasser zu verhindern und die Verluste durch thermische Zersetzung des Ammoniaks zu Wasserstoff und Stickstoff zu kompensieren, wird Ammoniak in grossem Ueberschuss eingesetzt.

Die Reaktionstemperatur beträgt zweckmässig 1200 bis 1700 °C, vorzugsweise 1400 bis 1600 °C.

Je nach Reaktionsführung und Vorbereitung des Siliciumdioxids kann das $\alpha$-Siliciumnitridpulver in unterschiedlichen Teilchengrössen erhalten werden.

Setzt man in der oben beschriebenen Weise dem Siliciumdioxid $\alpha$-Siliciumnitridpulver als Keimbildner zu, vorteilhaft in einer Menge von 2 bis 10 Gew.%, bezogen auf das Siliciumdioxid, und hält die Reaktionsdauer relativ kurz, beispielsweise im Bereich von 1 bis 10 Stunden, so erhält man ein Produkt mit einer Primärteilchengrösse von weniger als 1 $\mu$m, das für die Herstellung von Hochleistungskeramik in der Regel bevorzugt wird. Verzichtet man dagegen auf den Zusatz des Keimbildners und hält längere Reaktionszeiten ein, so werden grössere Kristalle bis zu ca. 50 $\mu$m gebildet, die hexagonaldipyramidale Form und kurzprismatischen Habitus aufweisen.

Andere Ausführungsformen des erfindungsgemässen Verfahrens machen von der Umsetzung des Siliciumdioxids mit Blausäure oder einem Ammoniak-Kohlenwasserstoff-Gemisch, das unter den Reaktionsbedingungen Blausäure bildet, Gebrauch. Die hierbei ablaufenden Reaktionen lassen sich durch die idealisierten Bruttogleichungen

$$3\ SiO_2 + 6\ HCN \rightarrow Si_3N_4 + N_2 + 6CO + 3H_2$$

und

$NH_3 + CH_4 \rightarrow HCN + 3H_2$ (für Methan als Koh-

lenwasserstoff)

beschreiben. Bei Verwendung eines Ammoniak-Kohlenwasserstoff-Gemisches wird Ammoniak vorzugsweise im Ueberschuss eingesetzt, um die Bildung von Kohlenstoff zu vermeiden.

Eine weitere Ausführungsform des erfindungsgemässen Verfahrens macht von der Umsetzung des Siliciumdioxids mit Ammoniak und/oder Stickstoff in Gegenwart von Kohlenstoff Gebrauch. Der Kohlenstoff wird hierbei vorzugsweise in Form von Russ, wie beispielsweise Gasruss oder Ofenruss eingesetzt. Da Ofenruss häufig relativ grosse Mengen von Metallverbindungen enthält, wird dieser zweckmässig mit Säure gewaschen, um den Metallgehalt auf unschädliche Werte zu verringern.
Der Russ wird dem Siliciumdioxid zweckmässig nach Desagglomerieren in einer Rührwerksmühle oder einem Attritor zugemischt, um eine möglichst homogene Verteilung zu erzielen, und dann gemeinsam mit diesem und dem gegebenenfalls zugesetzten Keimbildner sprühgetrocknet oder auf andere Weise in eine für die Reaktion geeignete Form gebracht.

Die Reaktion kann grundsätzlich in den gleichen Reaktortypen wie die Umsetzung ohne Kohlenstoffzusatz durchgeführt werden, die Reaktionsbedingungen sind an sich bekannt.
Nach Abschluss der Nitridierung wird der überschüssige Kohlenstoff entfernt. Dies wird vorzugsweise in einem Wirbelschichtreaktor durch Behandeln mit Luft, Sauerstoff oder einem sauerstoffhaltigen Gasgemisch oder mit Wasserstoff oder Ammoniak durchgeführt. Die Temperaturen bei der Entfernung des Kohlenstoffs liegen bei Verwendung von Sauerstoff zweckmässig bei 500-700 °C, mit Wasserstoff bei 600-1400 °C und mit Ammoniak bei 800-1400 °C.

Bei allen Ausführungsformen des erfindungsgemässen Verfahrens entsteht das $\alpha$-Siliciumnitrid in der Regel in Form von Agglomeraten. Diese werden vor der Verwendung des Siliciumnitrids als Keramikrohstoff zweckmässig nach einer der bekannten Methoden aufgebrochen, beispielsweise durch eine Behandlung in einem Attritor. Um keine unerwünschten Beimengungen durch den Mahlkörperabrieb einzubringen, werden vorzugsweise Mahlkörper aus Siliciumnitrid verwendet.
Bei dieser Mahlung bzw. Desagglomeration können auch Sinterhilfsmittel und andere Additive zugemischt werden.

Die nachfolgenden Beispiele verdeutlichen die Durchführung des erfindungsgemässen Verfahrens.

Beispiel 1:

Reinigung des Ausgangsmaterials Rohes Siliciumdioxidpulver aus der Aluminiumfluoridproduktion wurde zunächst bei 95 °C 4 Stunden mit einer verdünnten (0,6 Gew.%) Hexafluorkieselsäure (6 l auf 1 kg Siliciumdioxid) gerührt und anschliessend abfiltriert. Der Filterkuchen wurde mit entsalztem Wasser (10 l auf 1 kg Siliciumdioxid) gewaschen und getrocknet. Der Aluminiumgehalt wurde durch diese Behandlung von 1,5 Gew.% auf 130 ppm und der Fluorgehalt von 4,5 Gew.% auf 3,3 Gew.% reduziert.
Das so erhaltene Siliciumoxid hatte eine spezifische Oberfläche von 3 $m^2/g$ und eine Teilchengrösse von weniger als 0,1 mm.

Beispiel 2

9,5 kg nach Beispiel 1 gewaschenes Siliciumdioxid (Korngrösse 10-100 µm, spez. Oberfläche 3 $m^2/g$) wurden zusammen mit 0,5 kg $\alpha$-Siliciumnitridpulver als Keimbildner in einem Attritor in 15 l entsalztem Wasser mit 0,3 kg Verflüssiger (TRITON® X-100) und 5,8 kg Ottawasand (Korngrösse 0,8-1 mm) gemahlen. Die effektive Mahldauer betrug 8 h. Nach der Mahlung betrug die spezifische Oberfläche 80 $m^2/g$.
Die Suspension wurde sprühgetrocknet, so dass ein Granulat mit einer mittleren Korngrösse von 200 µm erhalten wurde. Das Granulat wurde in Portionen von 1 g in einem Aluminiumoxid-Schiffchen mit den Abmessungen 100 x 15 x 10 mm in einem Rohrofen mit Ammoniakdurchfluss bei Atmosphärendruck und einer Reaktionstemperatur von 1450 °C 6 h nitridiert. Die eingesetzte Ammoniakmenge betrug 80 g pro g Siliciumdioxid.

Das gebildete Siliciumnitrid wies folgende Eigenschaften auf:

Primärteilchengrösse
<1 µm
Anteil der $\alpha$-Modifikation
>98%
Sauerstoffgehalt
1,3 Gew.%

Beispiel 3

9,5 kg nach Beispiel 1 gewaschenes Siliciumdioxid (Korngrösse 10-100 µm, spez. Oberfläche 3 $m^2/g$ wurden zusammen mit 0,5 kg $\alpha$-Siliciumnitridpulver als Keimbildner in einem Attritor in 21,5 l entsalztem Wasser mit 0,5 kg Verflüssiger (TRITON® X-100) und 5,8 kg Ottawasand (Korngrösse 0,8-1,1 mm) gemahlen. Die effektive Mahldauer betrug 30 min. Nach der Mahlung betrug die spezifische Oberfläche 30 $m^2/g$.
Anschliessend wurden 3,8 kg Gasruss (PRINTEX® U) zugemischt und weitere 30 min attritiert.
Die Suspension wurde sprühgetrocknet, so dass ein Granulat mit einer mittleren Korngrösse von 200 µm erhalten wurde.

Das Granulat wurde in Portionen von 25 g in einem Wirbelschichtreaktor mit 25 mm Durchmesser bei Atmosphärendruck mit Stickstoff bei 1480 °C 3 h nitridiert. Pro g $SiO_2$ wurden 16 g Stickstoff verwendet.
Das Nitridierungsprodukt hatte eine Primärteilchengrösse <1 µm, einen Gehalt von 8 Gew.% freiem Kohlenstoff und 1,2 Gew.% Sauerstoff und der Siliciumnitridanteil bestand zu >98% aus der α-Modifikation.

Nach dem Abkühlen wurde das Siliciumnitridpulver in einem Wirbelschichtofen mit Luft 30 Minuten auf 650 °C erhitzt, um den restlichen Kohlenstoff zu entfernen. Das so erhaltene Siliciumnitridpulver wies die folgenden Eigenschaften auf:

Phasenzusammensetzung (Röntgenbeugung)
>98% α-$Si_3N_4$
Spezifische Oberfläche (BET)
10 $m^2$/g
Kohlenstoffgehalt total
0,6 Gew.%
Sauerstoffgehalt
1,6 Gew.%
Metallische Verunreinigungen
200 ppm

Beispiel 4

9,5 kg nach Beispiel 1 gewaschenes Siliciumdioxid (Korngrösse 10-100 µm, spez. Oberfläche 3 $m^2$/g) wurden zusammen mit 0,5 kg α-Siliciumnitridpulver als Keimbildner in einem Attritor in 15 l entsalztem Wasser mit 0,3 kg Verflüssiger (TRITON® X-100) und 5,8 kg Ottawasand (Korngrösse 0,8-1,0 mm) gemahlen. Die effektive Mahldauer betrug 30 min. Nach der Mahlung betrug die spez. Oberfläche 30 $m^2$/g. die Suspension wurde sprühgetrocknet, so dass ein Granulat mit einer mittleren Korngrösse von 200 µm erhalten wurde. Das Granulat (30 g) wurde in einem Wirbelschichtreaktor mit 25 mm Durchmesser bei Atmosphärendruck mit $NH_3$:$CH_4$ = 2:1 bei 1500 °C 4 h nitridiert. Pro g $SiO_2$ wurden 20 g Gas verwendet.
Das Nitridierungsprodukt hatte eine Primärteilchengrösse <1 µm, einen Gehalt von 0,3 Gew.% Kohlenstoff, 1,5 Gew.% Sauerstoff und der Siliciumnitridanteil bestand zu >98% aus der α-Modifikation.

**Patentansprüche**

1. Verfahren zur Herstellung von α-Siliciumnitridpulver durch reduktive Nitridierung von Siliciumdioxid bei 1200 bis 1700 °C, dadurch gekennzeichnet, daß als Siliciumdioxid das durch Umsetzung von Hexafluorkieselsäure mit Aluminiumhydroxid entstehende amorphe Siliciumdioxid eingesetzt wird.

2. Verfahren nach Patentanspruch 1, dadurch gekennzeichnet, daß das Siliciumdioxid vor der Nitridierung zur Entfernung von Metallverbindungen mit Säure gewaschen wird.

3. Verfahren nach Patentanspruch 2, dadurch gekennzeichnet, daß als Säure verdünnte Hexafluorkieselsäure verwendet wird.

4. Verfahren nach mindestens einem der Patentansprüche 1 bis 3, dadurch gekennzeichnet, daß als Reduktions- und Nitridierungsmittel Ammoniak eingesetzt wird.

5. Verfahren nach mindestens einem der Patentansprüche 1 bis 3, dadurch gekennzeichnet, daß als Reduktions- und Nitridierungsmittel Blausäure oder ein Gasgemisch aus Kohlenwasserstoff und Ammoniak verwendet wird.

6. Verfahren nach mindestens einem der Patentansprüche 1 bis 3, dadurch gekennzeichnet, daß die reduktive Nitridierung mit Kohlenstoff und Stickstoff und/oder Ammoniak durchgeführt wird.

7. Verfahren nach Patentanspruch 6, dadurch gekennzeichnet, daß als Kohlenstoff Gasruss oder gewaschener Ofenruss eingesetzt wird.

8. Verfahren nach mindestens einem der Patentansprüche 1 bis 7, dadurch gekennzeichnet, daß dem Siliciumdioxid als Keimbildner 2 bis 10 Gew.% feines α-Siliciumnitridpulver zugemischt werden.

9. Verfahren nach mindestens einem der Patentansprüche 1 bis 8, dadurch gekennzeichnet, daß die reduktive Nitridierung des Siliciumdioxids in einem Wirbelschichtreaktor durchgeführt wird.

10. Verfahren nach mindestens einem der Patentansprüche 1 bis 9, dadurch gekennzeichnet, daß das Siliciumdioxid vor der Nitridierung einer Desagglomeration und/oder Mahlung in einer Rührwerkskugelmühle oder einem Attritor mit Mahlkörpern aus Siliciumdioxid unterzogen wird.

11. Verfahren nach Patentanspruch 10, dadurch gekennzeichnet, daß als Mahlkörper abgerundeter Quarzsand verwendet wird.

12. Verfahren nach mindestens einem der Patentansprüche 1 bis 11, dadurch gekennzeichnet, daß das Siliciumdioxid mit dem gegebenenfalls eingesetzten Keimbildner und/oder Kohlenstoff

durch Sprühtrocknen einer wäßrigen Suspension getrocknet und granuliert wird.

**13.** Verwendung des durch Umsetzung von Hexafluorkieselsäure mit Aluminiumhydroxid entstehenden amorphen Siliciumdioxids zur Herstellung von $\alpha$-Siliciumnitridpulver.

Europäisches Patentamt

# EUROPÄISCHER RECHERCHENBERICHT

Nummer der Anmeldung

**EP 91 11 6167**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 693 878 (SKARIA)<br>* das ganze Dokument * * | 1-3 | C 01 B 21/068<br>C 04 B 35/58 |
| A | NL-A-8 802 115 (STAMICARBON)<br>* Seite 2, Zeile 23 - Seite 3, Zeile 18; Ansprüche 1-6,10,13-16 * * | 1,6,13 | |
| A | CHEMICAL ABSTRACTS, vol. 95, no. 12, September 1981, Columbus, Ohio, US; abstract no. 107733 E, E. PALCEVSKIS ET AL.: 'Silicon and boron nitridation in the presence of hydrocarbons in high tempareture nitrogen stream.' Seite 682 ;<br>* Zusammenfassung * * | 5 | |
| A | DE-A-2 703 354 (TOSHIBA CERAMICS)<br>* Ansprüche 1,6 * * | 6,7 | |
| A | EP-A-0 082 343 (TOKYO SHIBAURA)<br>* Ansprüche 1,3 * * | 8 | |
| A | CHEMICAL ABSTRACTS, vol. 96, no. 4, Januar 1982, Columbus, Ohio, US; abstract no. 23718, A. SZWEDA ET AL.: 'The praperation of silicon nitride from silica by sol-gel processing.' Seite 233 ;<br>* Zusammenfassung * * | 12 | RECHERCHIERTE SACHGEBIETE (Int. Cl.5)<br>C 01 B |

Der vorliegende Recherchenbericht wurde für alle Patentansprüche erstellt

| Recherchenort | Abschlußdatum der Recherche | Prüfer |
|---|---|---|
| Den Haag | 21 Januar 92 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument